# EUROPÄISCHE PATENTSCHRIFT

(11) **EP 4 188 064 B1**
(45) Veröffentlichungstag und Bekanntmachung des Hinweises auf die Patenterteilung: **20.05.2026**
(21) Anmeldenummer: 21749556.3
(22) Anmeldetag: 21.07.2021
(51) Int. Cl.: A01D 23/02

(54) **SCHNEIDVORRICHTUNG ZUM SCHNEIDEN VON PFLANZEN**
CUTTING DEVICE FOR CUTTING PLANTS
DISPOSITIF DE COUPE POUR COUPER DES PLANTES

(30) Priorität: 28.07.2020 DE 102020119880
(43) Veröffentlichungstag der Anmeldung: 07.06.2023
(73) Patentinhaber: Grimme Landmaschinenfabrik SE & Co. KG, 49104 Damme (DE)
(72) Erfinder: PLÖGER, Werner, D-49163 Bohmte (DE)
(74) Vertreter: Wischmeyer, André
(86) Internationale Anmeldenummer: PCT/EP2021/070439
(87) Internationale Veröffentlichungsnummer: WO 2022/023147

(56) Entgegenhaltungen:
- EP-B1- 0 264 011
- EP-B1- 2 098 108
- CN-A- 107 736 120
- CN-A- 110 352 688
- DE-A1- 1 632 852
- US-A- 2 261 324

## Beschreibung

Die Erfindung betrifft eine Schneidvorrichtung zum Schneiden von Pflanzen. Die Schneidvorrichtung umfasst zumindest eine Schneideinheit. Die Schneideinheit weist zumindest ein an einem Halteelement befestigtes Tastelement zur Bestimmung einer Erstreckung einer Pflanze auf. Weiterhin weist die Schneideinheit zumindest ein an einem weiteren Halteelement befestigtes Schneidelement zum Schneiden der Pflanze in Abhängigkeit von der Erstreckung auf. Weiterhin weist die Schneideinheit zumindest zwei Rahmenkoppelelemente auf. Zumindest eines der Halteelemente ist durch die Rahmenkoppelelemente mit einem Schneidvorrichtungsrahmen gekoppelt. Die Halteelemente sind relativ zueinander beweglich angeordnet.

Eine derartige Schneidvorrichtung ist aus dem Bereich der landwirtschaftlichen Erntetechnik bekannt und dient dem Abtrennen eines oberen Bestandteils von Rüben, bevor sie aus der Erde ausgehoben werden. Aus dem Bestandteil wächst insbesondere Kraut, das nicht mit den Rüben geerntet werden soll. Im Betrieb gleitet das Tastelement zeitweise über die zu schneidenden Rüben, um dem Schneidelement eine Schneidhöhe vorzugeben.

Um die Halteelemente relativ zueinander zu bewegen, etwa um je nach Rübenbestand eine Höhendifferenz zwischen dem Tastelement und dem Schneidelement und damit die Größe des abzutrennenden Fruchtbestandteils zu verändern, sind die Halteelemente gleichzeitig relativ zum Schneidvorrichtungsrahmen zu bewegen.

Durch eine Bewegung der Halteelemente relativ zum Schneidvorrichtungsrahmen verändert sich die Dynamik des Tastelementes im Betrieb und erhöht oder verringert sich die Kraft, mit der das Tastelement auf die zu schneidenden Rüben einwirkt. Eine zu hohe Kraft verursacht im Betrieb regelmäßig, dass die Position der zu schneidenden Rüben im/am Boden unbeabsichtigt verändert wird, sie insbesondere umgeworfen werden, und folglich nicht mehr an der richtigen Stelle geschnitten werden können. Eine zu geringe Kraft verhindert einen hinreichenden Kontakt zwischen dem Tastelement und aufeinanderfolgenden Rüben unterschiedlicher Größe, weshalb die die tiefergelegenen Rüben auf einer zu großen Höhe geschnitten wird.

Derartige Schneidvorrichtungen mit Tast- und Schneidelement sind grundsätzlich aus der EP 0 264 011 A1 und der US 2,261,324 A bekannt.

Aufgabe der vorliegenden Erfindung ist die Bereitstellung einer Schneidvorrichtung sowie einer Vorrichtung mit der Schneidvorrichtung, die die vorgenannten Nachteile vermeidet und ein zuverlässiges Schneiden von Pflanzen sowie eine verbesserte Anpassbarkeit an unterschiedliche Betriebsbedingungen ermöglicht.

Erfindungsgemäß umfasst die Schneidvorrichtung eine Stellvorrichtung, die zu einer Verstellung der Halteelemente relativ zueinander ausgebildet ist. Die Verstellung ist von einer Bewegung zumindest eines der Halteelemente relativ zum Schneidvorrichtungsrahmen unabhängig.

Die Stellvorrichtung ist insbesondere zu einer Verstellung der Halteelemente relativ zueinander ausgebildet, die unabhängig von der Erstreckung zu schneidender oder geschnittener Pflanzen oder der Erstreckung von deren Früchten oder einer Nähe dieser zum Schneidvorrichtungsrahmen ist. Die Stellvorrichtung ist vorzugsweise zur Verstellung der Halteelemente relativ zueinander außer Betrieb der Schneidvorrichtung, d. h. während kein Schneiden von Pflanzen stattfindet, und/oder während des Betriebes der Schneidvorrichtung, d. h. während ein Schneiden von Früchten stattfindet, ausgebildet.

Durch die erfindungsgemäße Schneidvorrichtung lässt sich die Höhendifferenz, d.h. insbesondere ein Abstand zwischen Tastflächen des Tastelementes und einer Schneide des Schneidelements bezogen auf eine vertikale Richtung, und dadurch das Ausmaß des abzuschneidenden Pflanzen- bzw. Fruchtbestandteils variieren, ohne dass sich damit die Dynamik des Tastelementes oder die von ihr auf die Früchte wirkenden Kräfte ändern. Insbesondere lässt sich durch die erfindungsgemäße Lösung der Aufgabe eine Verstellung der Halteelemente relativ zueinander realisieren, die unabhängig von einer Winkellage zumindest eines der Rahmenkoppelelemente relativ zum Schneidvorrichtungsrahmen ist. Auch von einer Position des Schneidvorrichtungsrahmens, insbesondere von seiner Höhe relativ zu einer Aufstandsfläche der Schneidvorrichtung, ist die Höhendifferenz bevorzugt nicht abhängig, wodurch der Schneidvorrichtungsrahmen unbeweglich gelagert werden kann.

Mit der erfindungsgemäßen Schneidvorrichtung lässt sich vorzugsweise je nach zu schneidendem Pflanzenbestand, insbesondere in Abhängigkeit von Sorte bzw. Größe der Pflanzen, und der zu deren Ertastung optimalen Kraft eine Ausgangsstellung des ersten Halteelementes relativ zum Schneidvorrichtungsrahmen vorauswählen. Während des Betriebes bewegt sich das Tastelement zur Ertastung der Erstreckung bei variierenden Pflanzenhöhen insbesondere um die Ausgangsstellung auf und ab. Das Schneidelement folgt dem Tastelement und schneidet jede Pflanze auf der gewünschten und durch die Stellvorrichtung eingestellte Höhe. Die Höhe, das heißt die Höhendifferenz zwischen dem Tastelement und dem Schneidelement, ist insbesondere unabhängig sowohl von der Ausgangsstellung der Schneideinheit als auch von den Bewegungen der Schneideinheit um die Ausgangsstellung.

Bevorzugt umfasst die Schneideinheit zumindest ein Rückstellelement, das insbesondere an einem der Rahmenkoppelelemente und/oder an dem Schneidvorrichtungsrahmen angeordnet ist. Das insbesondere als Spiralfeder ausgebildete Rückstellelement ist zu einer Erhöhung und/oder zu einer Verringerung der Kraft, mit der das Tastelement auf die zu schneidenden Pflanzen einwirkt, bevorzugt einstellbar ausgebildet. Das Rückstellelement, insbesondere dessen Federkraft, ist vorzugsweise manuell und/oder automatisiert, das heißt durch ein Bedienpult, außer Betrieb der Schneidvorrichtung und/oder während des Betriebes der Schneidvorrichtung einstellbar. Hierdurch lässt sich die erfindungsgemäße Schneidvorrichtung noch besser in der Abhängigkeit vom zu schneidenden Pflanzenbestand konfigurieren.

Die Halteelemente sind von der Schneidvorrichtung, insbesondere von der Schneideinheit, umfasst. Das Schneidelement und das Tastelement sind insbesondere zumindest im Betrieb ortsfest und unbeweglich am jeweiligen Halteelement befestigt.

Das Tastelement umfasst insbesondere eine Mehrzahl von Tastkufen, die zu einem unmittelbaren Kontakt mit den zu schneidenden Früchten ausgebildet sind. Die zu bestimmende Erstreckung ist insbesondere eine Höhe der Pflanze bzw. der Frucht relativ zur Aufstandsfläche der Schneidvorrichtung. Das Schneidelement ist dem Tastelement vorzugsweise in eine Fortbewegungsrichtung nachgeordnet, um je nach Erstreckung der Pflanze zu schneiden. Bevorzugt ist die Schneideinheit derart konfiguriert, dass das Schneidelement Rüben in deren oberen Bereich mit einem zumindest im Wesentlichen waagerechten Schnitt durchtrennt, um Krautbestandteile von den Rüben zu entfernen. Die Fortbewegungsrichtung ist diejenige Richtung, in die die Schneidvorrichtung oder ein damit gekoppeltes Antriebsfahrzeug im Betrieb fährt.

Der Schneidvorrichtungsrahmen der Schneidvorrichtung ist nicht von der Schneideinheit umfasst. Der Schneidvorrichtungsrahmen ist der Schneideinheit in die Fortbewegungsrichtung insbesondere vorgeordnet und erstreckt sich bevorzugt in eine zur Fortbewegungsrichtung orthogonale, horizontale Querrichtung über die zumindest eine Schneideinheit hinaus. Insbesondere ist der Schneidvorrichtungsrahmen als Querträger, bevorzugt als Vierkantrohr ausgebildet.

Vorzugsweise sind die Rahmenkoppelelemente jeweils schwenkbar am Schneidvorrichtungsrahmen und schwenkbar an einem ersten der Halteelemente angeordnet. Insbesondere bilden die Rahmenkoppelelemente eine erste Parallelogrammführung aus. Dadurch, dass die Rahmenkoppelelemente eine Parallelogrammführung ausbilden, beschreibt das erste Halteelement bei einer Verstellung dessen relativ zum Schneidvorrichtungsrahmen eine translatorische Bewegung entlang einer Kreisbahn. Dadurch ist das Tastelement bzw. das Schneidelement, welches am ersten Halteelement angeordnet ist, jedenfalls optimal zur zu schneidenden Pflanze ausgerichtet.

Eine Parallelogrammführung zeichnet sich grundsätzlich dadurch aus, dass sie zumindest zwei sich insbesondere parallel länglich erstreckende Koppelelemente umfasst, die jeweils sowohl an einem ersten gekoppelten Element als auch an einem zweiten gekoppelten Element schwenkbar angeordnet sind. Der der Abstand der zwei Schwenkachsen des einen Koppelelementes gleicht dabei dem Abstand der zwei Schwenkachsen des/der anderen Koppelelemente/s. Außerdem gleicht der Abstand der Schwenkachsen des einen gekoppelten Elementes dem Abstand der korrespondierenden Schwenkachsen des anderen gekoppelten Elementes.

Vorzugsweise sind die Haltelemente derart gekoppelt, dass sie relativ zueinander zumindest anteilig, insbesondere ausschließlich translatorisch beweglich sind. Hierdurch sind sowohl das Tastelement als auch das Schneidelement im Betrieb auch bei unterschiedlichen Einstellungen relativ zueinander jeweils bestmöglich zur zu schneidenden Pflanze orientiert.

Bevorzugt sind die beiden Halteelemente durch zumindest zwei an beiden Halteelementen schwenkbar angeordnete Haltekoppelelemente miteinander gekoppelt. Die Haltekoppelelemente bilden insbesondere eine zweite Parallelogrammführung aus. Hierdurch wird auf konstruktiv einfache Weise umgesetzt, dass sowohl das Schneidelement als auch das Tastelement im Betrieb immer bestmöglich zur zu schneidenden Pflanze orientiert sind. Durch diese Ausbildung ist bevorzugt das erste der Halteelemente an den Rahmenkoppelelementen angeordnet und ein zweites der Halteelemente mittels zwei Parallelogrammführungen mit dem Schneidvorrichtungsrahmen gekoppelt. Bevorzugt sind ein erstes Rahmenkoppelelement und ein erstes Haltekoppelelement um dieselbe Schwenkachse schwenkbar relativ zum ersten Halteelement daran angeordnet. Besonders bevorzugt sind ein zweites Rahmenkoppelelement und ein zweites Haltekoppelelement schwenkbar um dieselbe Schwenkachse relativ zum ersten Halteelement daran angeordnet. Durch diese Ausbildung ist die Schneidvorrichtung besonders kompakt und hat im Betrieb eine minimale Trägheit, wodurch es je nach zu schneidendem Pflanzenbestand auch so betrieben werden kann, dass die auf die zu schneidenden Pflanzen wirkenden Kräfte minimal sind.

Alternativ zu den Haltekoppelelementen sind die Halteelemente relativ zu einander bevorzugt verschieblich gelagert. Insbesondere sind die Halteelemente über eine Schiebeführung miteinander gekoppelt und in eine zu einer Horizontalen angewinkelte Richtung zueinander verschieblich. Dazu ist die Stellvorrichtung insbesondere im Bereich der Schiebenführung angeordnet.

**In** einer vorteilhaften Ausgestaltung der Erfindung umfasst sie Schneidvorrichtung, insbesondere die Stellvorrichtung der Schneidvorrichtung, zumindest ein Stellelement zur Verstellung der Halteelemente, das schwenkbar, insbesondere ausschließlich schwenkbar, am Schneidvorrichtungsrahmen angeordnet ist. Eine Stellrahmenschwenkachse, um die das Stellelement relativ zum Schneidvorrichtungsrahmen schwenkbar ist, ist bevorzugt ortsfest relativ zum Schneidvorrichtungsrahmen. Das Stellelement ist mittelbar oder unmittelbar mit der Schneideinheit gekoppelt. Insbesondere ist die Stellvorrichtung an einem der Halteelemente oder an einem der Haltekoppelelemente angeordnet. Durch die Lagerung des Stellelementes ist dieses insbesondere außerhalb des Bereiches der Halteelemente angeordnet und damit vor Verschmutzung und erhöhtem Verschleiß geschützt.

Alternativ oder zusätzlich zum vorbeschriebenen Stellelement umfasst die Stellvorrichtung vorzugsweise einen Pneumatikzylinder, einen Hydraulikzylinder, einen elektrischen Linearantrieb, einen Elektromotor und/oder einen Hydraulikmotor. Dieser ist insbesondere am Schneidvorrichtungsrahmen oder an der Schneideinheit angeordnet.

Vorzugsweise umfasst die Schneidvorrichtung, bevorzugt die Stellvorrichtung der Schneidvorrichtung, ein insbesondere am Stellelement angeordnetes Stellkoppelelement. Das Stellkoppelelement ist insbesondere an einem ersten Haltekoppelelement und/oder am zweiten Halteelement angeordnet. Bevorzugt ist das Stellelement ausschließlich durch das Stellkoppelelement mit der Schneideinheit gekoppelt. Insbesondere ist das Stellkoppelelement sowohl am Stellelement als auch am ersten Haltekoppelelement bzw. am zweiten Halteelement ausschließlich schwenkbeweglich um eine oder mehrere Achsen angeordnet. Durch die Ausbildung des Stellkoppelelementes ist die Stellvorrichtung konstruktiv einfach und dadurch ausfallsicher realisiert.

Das erste Haltekoppelelement weist insbesondere einen Stellkoppelabschnitt und einen Haltekoppelabschnitt auf. Der Stellkoppelabschnitt verläuft zumindest abschnittsweise, insbesondere über die gesamte Länge, zwischen einer ersten Halteschwenkachse und einer ersten Stellkoppelschwenkachse. Der Haltekoppelabschnitt verläuft zumindest abschnittsweise, insbesondere ausschließlich, zwischen der ersten Halteschwenkachse und einer zweiten Halteschwenkachse. Um die erste Halteschwenkachse ist das erste Haltekoppelelement relativ zum ersten Halteelemente schwenkbar. Um die zweite Halteschwenkachse ist das erste Haltekoppelelement relativ zu einem jeweils anderen der Halteelemente schwenkbar. Um die erste Stellkoppelschwenkachse ist die Stellvorrichtung, insbesondere das Stellkoppelelement, relativ zum ersten Haltekoppelelement oder zum zweiten Halteelement schwenkbar.

Die erste Halteschwenkachse, die zweite Halteschwenkachse und die erste Stellkoppelschwenkachse sind insbesondere nicht in einer Ebene angeordnet. Der Stellkoppelabschnitt verläuft relativ zum Haltekoppelabschnitt bevorzugt angewinkelt, besonders bevorzugt um weniger als 90°. Durch diese Ausbildung ist das erste Haltekoppelelement insbesondere als Kniehebel konfiguriert. Der Haltekoppelabschnitt bildet bevorzugt die zweite Parallelogrammführung mit aus. Durch diese Ausbildung des ersten Haltekoppelelementes lassen sich verhältnismäßig große Kräfte in den einzelnen, notwendigen Schwenklagern vermeiden und gleichzeitig der Bauraumbedarf der Schneidvorrichtung reduzieren.

In einer vorteilhaften Ausgestaltung der Erfindung bilden das Stellelement und das erste Haltekoppelelement, insbesondere dessen Stellkoppelabschnitt, zumindest in einer Position des ersten Halteelementes relativ zum Schneidvorrichtungsrahmen eine dritte Parallelogrammführung aus. Bevorzugt ist das erste Haltekoppelelement derart ausgebildet, dass es sowohl die zweite Parallelogrammführung als auch die dritte Parallelogrammführung, insbesondere mit demselben Abschnitt des ersten Haltekoppelelementes, mit ausbildet. In der bevorzugten Ausgestaltung bilden das Stellelement, das erste Haltekoppelelement und das zweite Haltekoppelelement dieselbe Parallelogrammführung aus. Insbesondere sind die zweite Halteschwenkachse und die erste Stellkoppelschwenkachse identisch. Durch diese Ausbildung lassen sich die Halteelemente in der genannten Position des ersten Halteelementes durch die Stellvorrichtung auf konstruktiv einfache Weise ausschließlich translatorisch zueinander verstellen.

Vorzugsweise haben die Stellrahmenschwenkachse und zumindest die erste Rahmenschwenkachse einen Abstand voneinander, der dem Abstand der dritten Halteschwenkachse von der ersten Halteschwenkachse oder dem Abstand der zweiten Halteschwenkachse zu der ersten Stellkoppelschwenkachse oder der Summe der beiden letztgenannten Abstände entspricht. Um die Stellrahmenschwenkachse ist das Stellelement schwenkbar relativ zum Schneidvorrichtungsrahmen angeordnet. Um die zweite Halteschwenkachse ist das erste Haltekoppelelement bevorzugt schwenkbar relativ zum ersten Halteelement angeordnet. Um die erste Halteschwenkachse ist das erste Haltekoppelelement bevorzugt schwenkbar am zweiten Halteelement angeordnet. Alternativ oder zusätzlich sind die erste Rahmenschwenkachse identisch mit der Stellrahmenschwenkachse und/oder ist die dritte Halteschwenkachse identisch mit der ersten Halteschwenkachse und/oder ist die zweite Halteschwenkachse identisch mit der ersten Stellkoppelschwenkachse. In diesem Fall sind die vorgenannten Abstände insbesondere jeweils nicht vorhanden. Die genannten Achsen verlaufen insbesondere sämtlich parallel zueinander und in die Querrichtung.

Besonders bevorzugt hat eine zweite Stellkoppelschwenkachse von der ersten Stellkoppelschwenkachse einen Abstand, der dem Abstand einer ersten Rahmenschwenkachse von der dritten Halteschwenkachse entspricht. Um die zweite Stellkoppelschwenkachse ist das Stellkoppelelement relativ zum Stellelement verschwenkbar. Um die erste Stellkoppelschwenkachse ist das Stellkoppelelement dabei relativ zum ersten oder zweiten Halteelement und/oder zum ersten Haltekoppelelement verschwenkbar. Um die erste Rahmenschwenkachse ist ein erstes Rahmenkoppelelement relativ zum Schneidvorrichtungsrahmen verschwenkbar. Um die dritte Halteschwenkachse ist das erste Rahmenkoppelelement schwenkbar am ersten Halteelement angeordnet. Der Abstand entspricht insbesondere auch dem Abstand einer zweiten Rahmenschwenkachse zu einer fünften Halteschwenkachse. Um die zweite Rahmenschwenkachse ist ein zweites Rahmenkoppelement schwenkbar relativ zum Schneidvorrichtungsrahmen. Um die fünfte Halteschwenkachse ist das zweite Rahmenkoppelelement schwenkbar relativ zum ersten Halteelement.

Durch die vorbeschriebene Ausbildung bilden das Stellkoppelelement, das erste Rahmenkoppelelement und ggf. das zweite Rahmenkoppelelement eine Parallelogrammführung aus, die bevorzugt die erste Parallelogrammführung ist, in die sich das Stellkoppelelement eingliedert. Durch diese Ausbildung ist der vorbeschriebene Vorteil nicht nur in einer Position des ersten Halteelementes relativ zum Schneidvorrichtungsrahmen zu erreichen, sondern unabhängig von der Position der Halteelemente relativ zum Schneidvorrichtungsrahmen.

Insbesondere verlaufen die genannten Schwenkachsen, zumindest die Stellkoppelschwenkachsen und die Rahmenschwenkachsen, parallel zueinander und jeweils in die Querrichtung. Die Haupterstreckungsrichtung des Stellkoppelelementes ist dabei bevorzugt parallel zur Haupterstreckungsrichtung der Rahmenkoppelelemente. Alternativ ist die Haupterstreckungsrichtung des Stellkoppelelementes ungleich den Haupterstreckungsrichtungen der Rahmenkoppelelemente.

In einer bevorzugten Ausgestaltung der Erfindung ist das Stellkoppelement längenvariabel und kann der Abstand zwischen den Stellkoppelschwenkachsen variiert werden. Durch diese Möglichkeit lässt sich eine Abhängigkeit der Höhendifferenz zwischen Tastelement und Schneidelement von der Position der Schneideinheit relativ zum Schneidvorrichtungsrahmen erreichen. Diese Abhängigkeit kann bei einzelnen Pflanzen-, insbesondere Rübensorten sinnvoll sein. Die Rahmenkoppelelemente haben insbesondere eine nichtverstellbare Länge. Zumindest eines der Rahmenkoppelelemente ist insbesondere derart ausgebildet, dass dadurch eine Verschwenkung der Halteelemente relativ zum Schneidvorrichtungsrahmen um eine Schwenkachse, die von der Querrichtung abweicht, verhindert ist. Dadurch sind das Tastelement und das Schneidelement in Fortbewegungsrichtung jedenfalls hintereinander angeordnet.

Vorzugsweise ist das zweite Halteelement in einer Fortbewegungsrichtung zumindest abschnittsweise zwischen dem Schneidvorrichtungsrahmen und dem ersten Halteelement angeordnet. Insbesondere folgt das erste Halteelement in die Fortbewegungsrichtung dem zweiten Halteelement. Durch diese Ausbildung sind das erste und das zweite Parallelogramm in einer Seitenansicht überlagert, wodurch die erfindungsgemäße Schneidevorrichtung besonders klein baut.

Bevorzugt sind zumindest die Halteelemente zumindest überwiegend, insbesondere ausschließlich aus Aluminium ausgebildet. Hierdurch sind wiederum die Trägheit der Schneideinheit und damit die Kraft, mit der diese im Betrieb zumindest auf die Pflanze einwirkt reduziert.

In einer vorteilhaften Ausgestaltung der Erfindung umfasst die Schneidvorrichtung zumindest zwei Schneideinheiten, wobei die Stellvorrichtung zur Verstellung von Halteelementen unterschiedlicher Schneideinheiten ausgebildet ist. Insbesondere ist jeder Schneideinheit ein Stellelement zugeordnet. Bevorzugt sind die den unterschiedlichen Schneideinheiten zugeordneten Stellelemente relativ zueinander ortsfest und lagefixiert. Insbesondere umfasst die Schneidvorrichtung ein sich in die Querrichtung und entlang der Schneideinheiten erstreckendes Querstellelement. Vorzugsweise sind die Stellelemente an dem Querstellelement befestigt und bilden mit dem Querstellelement bevorzugt eine Kurbelwelle aus. Die Stellelemente sind dabei in die Querrichtung betrachtet bevorzugt hintereinander angeordnet, d. h. die zweiten Stellkoppelschwenkachsen identisch. Durch die zentrale Stellvorrichtung lassen sich die Halteelemente der Schneideinheiten besonders einfach zueinander verstellen und die Stellvorrichtung sich konstruktiv besonders einfach ausbilden.

Insbesondere umfasst die Schneidvorrichtung eine an Rückstellelementen von zumindest zwei Schneideinheiten angeordnete Rückstelleinstellvorrichtung. Diese umfasst bevorzugt ein sich in die Querrichtung erstreckendes Rückstelleinstellelement, durch das sich mehrere Rückstellelemente spannen bzw. entspannen lassen. Damit ist auch die Einstellung der Rückstellkraft bevorzugt automatisiert zentral einstellbar.

Vorzugsweise ist zumindest eine der Schneideinheiten relativ zum Schneidvorrichtungsrahmen von einer ersten Arbeitskonfiguration in die Querrichtung in eine zweite Arbeitskonfiguration überführbar. An der einen Schneideinheit ist Überführung derer in die Querrichtung insbesondere eine Querstellvorrichtung angeordnet. Das der Schneideinheit zugeordnete Stellelement ist insbesondere zur Verstellung der Halteelemente der Schneideinheit in der ersten und in der zweiten Arbeitskonfiguration ausgebildet. Insbesondere ist die Schneideinheit in die Querrichtung verschieblich gegenüber dem Schneidvorrichtungsrahmen, wohingegen das Stellelement in die Querrichtung unbeweglich angeordnet ist. Durch die unterschiedlichen Arbeitskonfigurationen der zumindest einen Schneideinheit ist die Schneidvorrichtung in Pflanzenkulturen mit unterschiedlichen Reihenbreiten einsetzbar.

Zum Einsatz der Schneidvorrichtung in Rübenkulturen mit unterschiedlichen Reihenbreiten haben Längsmittelebenen benachbarter Schneideinheiten bevorzugt in der ersten Arbeitskonfiguration einen Abstand von 45 cm zueinander, in der zweiten Arbeitsposition einen Abstand von 50 cm zueinander. Das der überführbaren Schneideinheit zugeordnete Stellelement ist insbesondere mittig zwischen der Längsmittelebene einer der Schneideinheiten in der zweiten Arbeitskonfiguration und der Längsmittelebene derselben Schneideinheit in der ersten Arbeitskonfiguration angeordnet. Durch diesen Aufbau lässt sich eine Anpassbarkeit der Schneidvorrichtung an unterschiedliche Reihenbreiten mit den vorgenannten Vorteilen kombinieren. Alternativ sind je zwei Schneideinheiten relativ zueinander in die Querrichtung unbeweglich, jedoch gemeinsam relativ zu zumindest einer weiteren Schneideinheit in die Querrichtung beweglich. Die Schneideinheiten haben hierdurch insbesondere in beiden Arbeitskonfigurationen jeweils einen Querversatz zur zu schneidenden Reihe, der gering genug ist, um das Schneidergebnis nicht wesentlich zu verschlechtern. Der konstruktive Aufwand ist hierdurchlässt deutlich reduziert.

Vorzugsweise ist das Stellkoppelelement am Stellelement um eine von der ersten Stellkoppelschwenkachse abweichende Arbeitspositionsschwenkachse schwenkbar angeordnet. Das Stellelement ist dabei derart ausgebildet, dass es bei der Überführung der Schneideinheit von der ersten in die zweite Arbeitskonfiguration insbesondere zumindest in die Querrichtung ortsfest relativ zum Schneidvorrichtungsrahmen verbleibt. Insbesondere verläuft das Stellkoppelelement sowohl in der ersten als auch in der zweiten Arbeitskonfiguration der Schneideinheit in einer Draufsicht angewinkelt zur Fortbewegungsrichtung und ist insbesondere in beiden Arbeitspositionen um denselben Winkelbetrag relativ zur Fortbewegungsrichtung angewinkelt, insbesondere unabhängig von einer Verschwenkung des Stellkoppelelementes um die zweite Stellkoppelschwenkachse. Bevorzugt umfasst das zumindest eine Stellelement ein Kugelgelenk oder ein zweites Schwenklager, wodurch die Beweglichkeit des Stellelementes zum Stellkoppelelement um die zwei Schwenkachsen realisiert ist. Insbesondere ist das Stellkoppelelement länger ausgebildet als die Rahmenkoppelelemente der erfindungsgemäßen Schneidvorrichtung.

Insbesondere sind zumindest drei Schneideinheiten jeweils von einer ersten Arbeitsposition in eine Querrichtung in eine zweite Arbeitsposition überführbar. Der Abstand der Längsmittelebene einer ersten Schneideinheit in der ersten Arbeitskonfiguration von der Längsmittelebene der ersten Schneideinheit in der zweiten Arbeitskonfiguration ist dabei bevorzugt größer als der Abstand der Längsmittelebene einer zweiten Schneideinheit in der ersten Arbeitskonfiguration von der Längsmittelebene der zweiten Schneideinheit in der zweiten Arbeitskonfiguration. Der Winkelbetrag, um den das der ersten Schneideinheit zugeordnete Stellkoppelelement in den Arbeitspositionen zur Fortbewegungsrichtung angewinkelt ist, unterscheidet sich entsprechend von dem Winkelbetrag des einer zweiten Schneideinheit zugeordneten Stellkoppelelementes in deren Arbeitskonfigurationen. Alternativ zur Schwenkbeweglichkeit des Stellkoppelelementes um die Arbeitspositionsschwenkachse ist das zunächst eine Stellelement vorzugsweise in die Querrichtung verschieblich am Querstellelement angeordnet, so dass es der zugehörigen Schneideinheit sowohl in der ersten als auch in der zweiten Arbeitsposition in Fortbewegungsrichtung unmittelbar vorgeordnet ist.

Die Aufgabe wird weiterhin gelöst durch eine Vorrichtung, die eine vor- und/oder nachbeschriebene Schneidvorrichtung und eine in Fortbewegungsrichtung der Schneidvorrichtung vorgeordnete Krautentfernungsvorrichtung umfasst. Die Krautentfernungsvorrichtung hat bevorzugt ein im Betrieb um eine Rotationsachse rotierendes Krautentfernungselement. Der Schneidvorrichtungsrahmen ist zumindest im Betrieb ortsfest relativ zur Rotationsachse angeordnet. Bevorzugt umfasst die Vorrichtung außerdem Rodeschare bzw. Rodescheiben zum Roden von Rüben. Die Krautentfernungsvorrichtung ist insbesondere als Krautschläger bzw. Krautschlegel ausgebildet. Insbesondere ist die Vorrichtung als Rodevorsatz für eine Rübenerntemaschine ausgebildet. Die Schneidvorrichtung ist insbesondere als Nachköpfer für die Rüben ausgebildet.

Die Vorrichtung umfasst insbesondere einen Sensor zur Messung der Position der Schneideinheit relativ zum Schneidvorrichtungsrahmen. Der Sensor ist insbesondere als Winkelmesser ausgebildet, der im Betrieb den Winkel einer der Rahmenkoppelelemente relativ zum Schneidvorrichtungsrahmen misst. Auf Basis der von dem Sensor gemessenen Daten wird bevorzugt die Höhe der Krautentfernungsvorrichtung eingestellt. Bei der Auswertung der Signale des Sensors ist ob der nicht vorhandenen Abhängigkeit der Höhendifferenz zwischen dem Schneidelement und dem Tastelement von der Höhe des Schneidvorrichtungsrahmens über dem Boden keine Berücksichtigung der Höhe des Schneidvorrichtungsrahmens mehr notwendig. Somit kann die einzustellende Höhe der Krautentfernungsvorrichtung schneller und lediglich auf Basis der Sensorsignale berechnet werden.

Die Aufgabe wird weiterhin gelöst durch eine Rübenerntemaschine mit der vor- und/oder nachbeschriebenen Schneidvorrichtung oder mit der vor- und/oder nachbeschriebenen Vorrichtung.

Weitere Einzelheiten und Vorteile der Erfindung sind den nachfolgend beschriebenen, schematisch dargestellten Fig. zu entnehmen; es zeigen:
- Fig. 1: eine perspektivische Darstellung einer Schneideinheit einer ersten erfindungsgemäßen Schneidvorrichtung in einer ersten Arbeitsposition,
- Fig. 2: eine Seitenansicht der Schneideinheit gemäß Fig. 1,
- Fig. 3: eine bezogen auf Fig. 2 gegenüberliegende Seitenansicht der Schneideinheit gemäß Fig. 1,
- Fig. 4: eine weitere perspektivische Darstellung der Schneideinheit gemäß Fig. 1,
- Fig. 5: die perspektivische Darstellung gemäß Fig. 1, wobei sich die Schneideinheit in einer zweiten Arbeitsposition befindet,
- Fig. 6: eine Seitenansicht gemäß Fig. 2 wobei sich die Schneideinheit in der zweiten Arbeitsposition befindet,
- Fig. 7: eine schematische Seitenansicht einer Schneideinheit einer zweiten erfindungsgemäßen Schneidvorrichtung in einer ersten Arbeitsposition,
- Fig. 8: die schematische Seitenansicht gemäß Fig. 7, wobei sich die Schneideinheit sich in einer zweiten Arbeitsposition befindet,
- Fig. 9: die schematische Seitenansicht gemäß Fig. 7, wobei sich die Schneideinheit in einer ersten Stellung befindet,
- Fig. 10: die schematische Seitenansicht gemäß Fig. 7, wobei sich die Schneideinheit in einer zweiten Stellung befindet,
- Fig. 11: eine Seitenansicht einer ersten erfindungsgemäßen Vorrichtung,
- Fig. 12: eine perspektivische Darstellung der Vorrichtung gemäß Fig. 11,
- Fig. 13: eine Seitenansicht einer zweiten erfindungsgemäßen Vorrichtung in einem montierten Zustand,
- Fig. 14: eine Seitenansicht einer dritten erfindungsgemäßen Vorrichtung im montierten Zustand,
- Fig. 15: eine in Fortbewegungsrichtung gerichtete Draufsicht einer dritten erfindungsgemäßen Schneidvorrichtung in einer ersten Arbeitskonfiguration,
- Fig. 16: die Draufsicht gemäß Fig. 15, wobei sich die Schneidvorrichtung in einer zweiten Arbeitskonfiguration befindet,
- Fig. 17: eine schematische Seitenansicht einer Schneideinheit einer vierten erfindungsgemäßen Schneidvorrichtung.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest immer in Kombination mit den Merkmalen des Anspruchs 1. Sofern sinnvoll sind funktional gleichwirkende Teile mit identischen Bezugsziffern versehen.

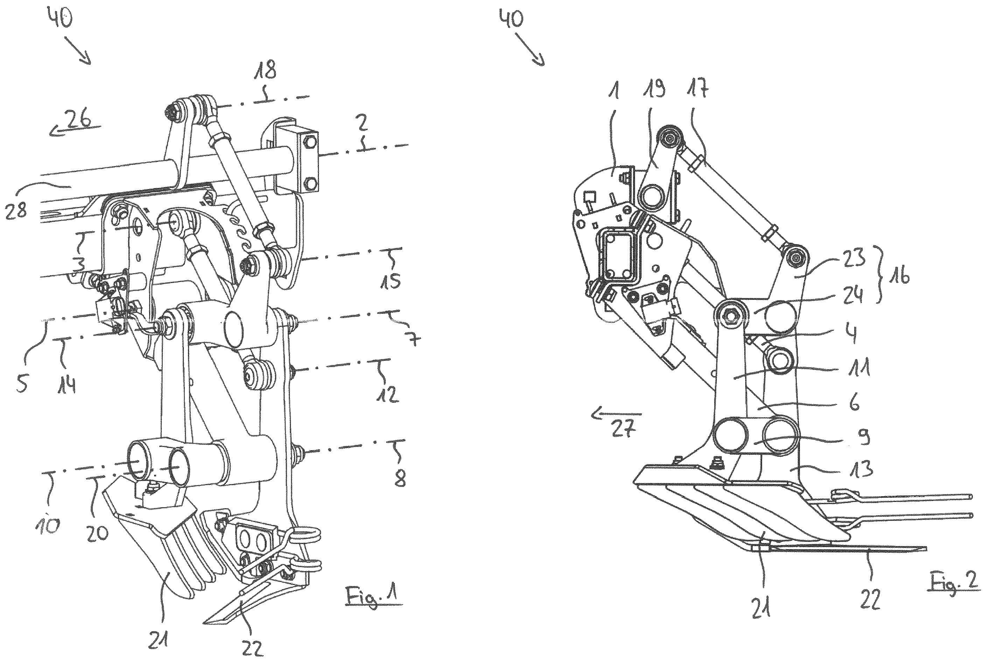

Die Fig. 1 bis 6 zeigen eine Schneideinheit 41 eines ersten Ausführungsbeispiels einer erfindungsgemäßen Schneidvorrichtung 40. Die Schneidvorrichtung 40 ist zum Schneiden von Rübenköpfen ausgebildet. Die Schneideinheit 41 umfasst ein an zweiten Halteelement 11 befestigtes Tastelement 21 zur Bestimmung einer Erstreckung der Rüben. Weiterhin umfasst die Schneideinheit 41 ein an einem ersten Halteelement 13 befestigtes Schneidelement 22 zum Schneiden der Rüben in Abhängigkeit von der bestimmten Erstreckung. Das Schneidelement 22 umfasst eine längliche Klinge. Im Betrieb der Schneidvorrichtung 40 wird diese in eine Fortbewegungsrichtung 27 fortbewegt und liegt das Tastelement 21 zumindest zeitweise auf den Rüben auf, woraufhin das Schneidelement 22 die Rüben anschließend schneidet.

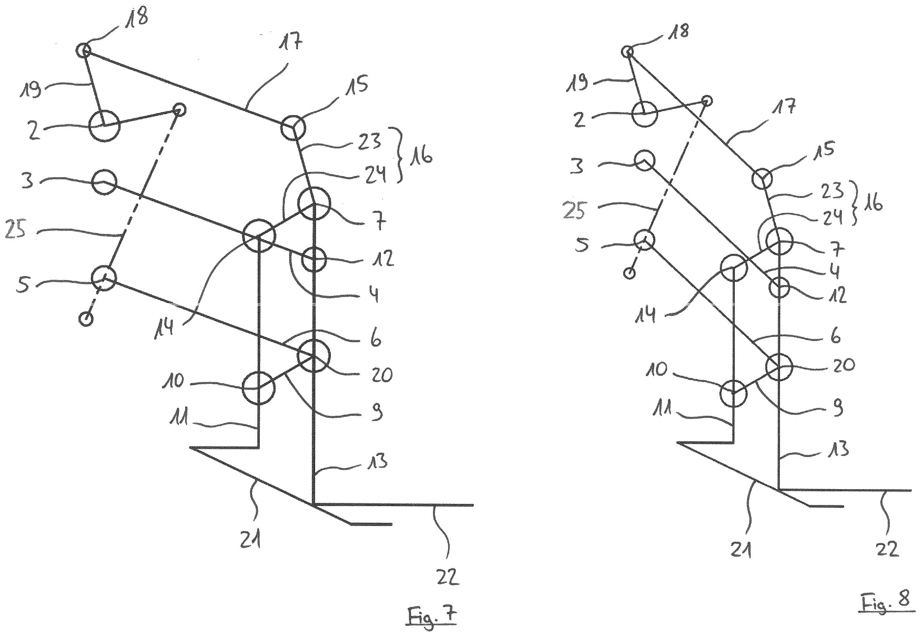

Die Schneideinheit 41 weist zwei Rahmenkoppelelemente 4, 6 auf. Das erste Halteelement 13 ist durch die Rahmenkoppelelemente 4, 6 mit einem Schneidvorrichtungsrahmen 1 gekoppelt. Die Rahmenkoppelelemente 4, 6 sind jeweils schwenkbar am Schneidvorrichtungsrahmen 1 und an dem ersten Halteelement 13 angeordnet und bilden eine erste Parallelogrammführung aus (vgl. dazu die schematischen nachfolgend erläuterten Fig. 7 - 10).

Die Halteelemente 11, 13 sind durch zwei an beiden Halteelementen 11, 13 schwenkbar angeordnete Haltekoppelelemente 9, 16 beweglich miteinander gekoppelt, die eine zweite Parallelogrammführung ausbilden. Die Schneidvorrichtung 40 umfasst ein der Schneideinheit 41 zugeordnetes Stellelement 19 zur Verstellung der Halteelemente 11, 13, das schwenkbar am Schneidvorrichtungsrahmen 1 angeordnet ist. Am Stellelement 19 ist ein Stellkoppelelement 17 angeordnet, das außerdem an einem ersten der Haltekoppelelemente 16 angeordnet ist. Das Stellelement 19 und das Stellkoppelelement 17 sind von einer Stellvorrichtung 42 umfasst, die zu einer Verstellung der Halteelemente 11, 13 relativ zueinander ausgebildet ist, die unabhängig von einer Bewegung zumindest eines der Halteelemente 11, 13 relativ zum Schneidvorrichtungsrahmen 1 ist.

Das erste Haltekoppelelement 16 weist einen Stellkoppelabschnitt 23 und einen Haltekoppelabschnitt 24 auf. Der Stellkoppelabschnitt 23 reicht von einer ersten Halteschwenkachse 7 bis zu einer ersten Stellkoppelschwenkachse 15. Das erste Haltekoppelelement 16 ist um die erste Halteschwenkachse 7 schwenkbar am ersten Halteelement 13 angeordnet. Das Stellkoppelelement 17 ist relativ zum ersten Haltekoppelelement 16 um die erste Stellkoppelschwenkachse 15 schwenkbar. Der Haltekoppelabschnitt 24 ist zwischen der Halteschwenkachse 7 und einer zweiten Halteschwenkachse 14 angeordnet. Das erste Haltekoppelelement 16 ist schwenkbar um die zweite Halteschwenkachse 14 am zweiten Halteelement 11 angeordnet.

Das Stellelement 19 ist relativ zum Stellkoppelelement 17 um eine zweite Stellkoppelschwenkachse 18 schwenkbar. Das Stellelement 19 ist ortsfest an einem als Rohr ausgebildeten und sich in eine Querrichtung 26 erstreckenden Querstellelement 28 angeordnet, das zusammen mit dem Stellelement 19 um eine Stellrahmenschwenkachse 2 schwenkbar am Schneidvorrichtungsrahmen 1 angeordnet ist. Das Stellelement 19 und das Haltekoppelelement 16, im Einzelnen dessen Stellkoppelabschnitt 23, bilden eine dritte Parallelogrammführung aus bzw. die zweite Parallelogrammführung mit aus.

Das erste Rahmenkoppelelement 4 ist um eine erste Rahmenschwenkachse 3 relativ zum Schneidvorrichtungsrahmen 1 schwenkbar. Das zweite Rahmenkoppelelement 6 ist relativ zum Schneidvorrichtungsrahmen 1 um eine zweite Rahmenschwenkachse 5 schwenkbar. Das erste Rahmenkoppelelement 4 ist relativ zum ersten Halteelement 13 um eine dritte Halteschwenkachse 12 schwenkbar. Ein zweites Haltekoppelelement 9 ist relativ zum ersten Halteelement 13 um eine vierte Halteschwenkachse 20 schwenkbar. Das Rahmenkoppelelement 6 ist relativ zum Halteelement 13 um eine fünfte Halteschwenkachse 8 schwenkbar. Die fünfte Halteschwenkachse 8 und die vierte Halteschwenkachse 20 fallen in den gezeigten Ausführungsbeispielen zusammen. Das zweite Haltekoppelelement 9 ist relativ zum zweiten Halteelement 11 um eine sechste Halteschwenkachse 10 schwenkbar.

Die zweite Stellkoppelschwenkachse 18 ist von der ersten Stellkoppelschwenkachse 15 so weit beabstandet wie die erste Rahmenschwenkachse 3 von der dritten Halteschwenkachse 12. Stellrahmenschwenkachse 2 ist von der ersten Rahmenschwenkachse 3 so weit beabstandet wie die dritte Halteschwenkachse 12 von der ersten Halteschwenkachse 7. Das zweite Halteelement 11 ist bezogen auf eine Fortbewegungsrichtung 27 zwischen dem Schneidvorrichtungsrahmen 1 und dem ersten Halteelement 13 angeordnet.

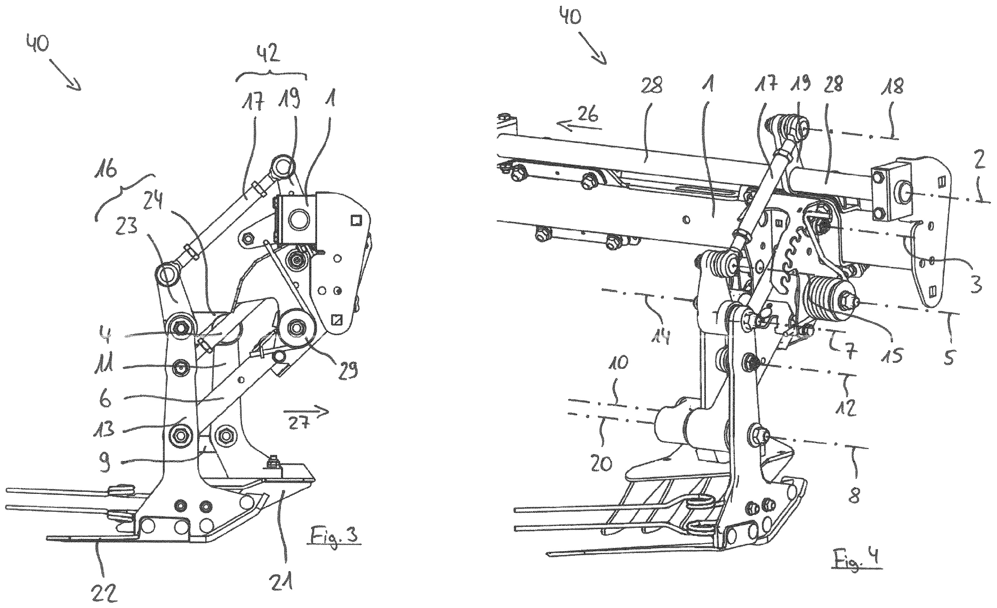

Im Bereich der zweiten Rahmenschwenkachse 5 ist ein Rückstellelement 29 angeordnet (vgl. Fig. 3). Das Rückstellelement 29 ist als Spiralfeder zwischen dem Schneidvorrichtungsrahmen 1 und dem zweiten Rahmenkoppelelement 6 angeordnet. Zusätzlich ist hier ein nicht gezeigter Winkelmesser angeordnet.

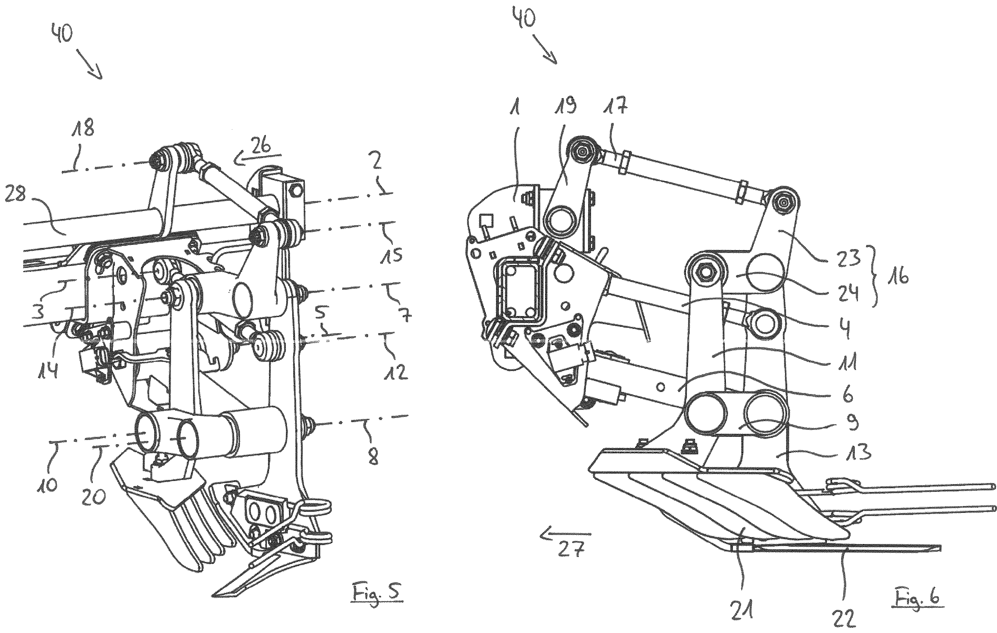

Die Fig. 1 bis 4 zeigen die Schneideinheit 41 bei einer übereinstimmenden Stellung der Stellvorrichtung 42 und in der gleichen Arbeitsposition, d.h. Position relativ zum Schneidvorrichtungsrahmen 1. Die Fig. 5 und 6 zeigen dieselbe Schneideinheit 41 in einer anderen Arbeitsposition, jedoch bei gleicher Stellung der Stellvorrichtung 42.

Die Funktion der erfindungsgemäßen Schneidvorrichtung 40 wird durch die schematischen Darstellungen gemäß den Fig. 7 - 10 verdeutlicht. Das dadurch schematisch gezeigte zweite Ausführungsbeispiel stimmt hinsichtlich vorbeschriebenen Komponenten und deren Verbindungen weitgehend mit dem ersten Ausführungsbeispiel (vgl. Fig. 1 bis 6) überein. Zusätzlich hat das zweite Ausführungsbeispiel ein am Querstellelement 28 schwenkbar angeordnetes Zentralstellelement 25, welches gestrichelt dargestellt ist.

Die Fig. 7 und 8 verdeutlichen, inwiefern die durch die Stellvorrichtung 42 veränderbare Positionierung des Schneidelementes 22 relativ zum Tastelement 21 unabhängig von einer Auf- oder Abbewegung der Halteelemente 11, 13 relativ zum Schneidvorrichtungsrahmen 1 ist. Während in der Arbeitsposition gemäß in Fig. 7 die Rahmenkoppelelemente 4, 6 relativ flach verlaufen und die Halteelemente 11, 13 relativ zum Schneidvorrichtungsrahmen 1 relativ hoch eingestellt sind, verlaufen die Rahmenkoppelelemente 4, 6 in Fig. 8 deutlich steiler und sind die Halteelemente 11, 13 entsprechend relativ zum Schneidvorrichtungsrahmen 1 deutlich tiefer angeordnet. Aufgrund der zweiten Parallelogrammführung ist die Positionierung von Schneidelement 22 und Tastelement 21 zueinander unabhängig von der Höhe der Halteelemente 11, 13 relativ zum Schneidvorrichtungsrahmen 1.

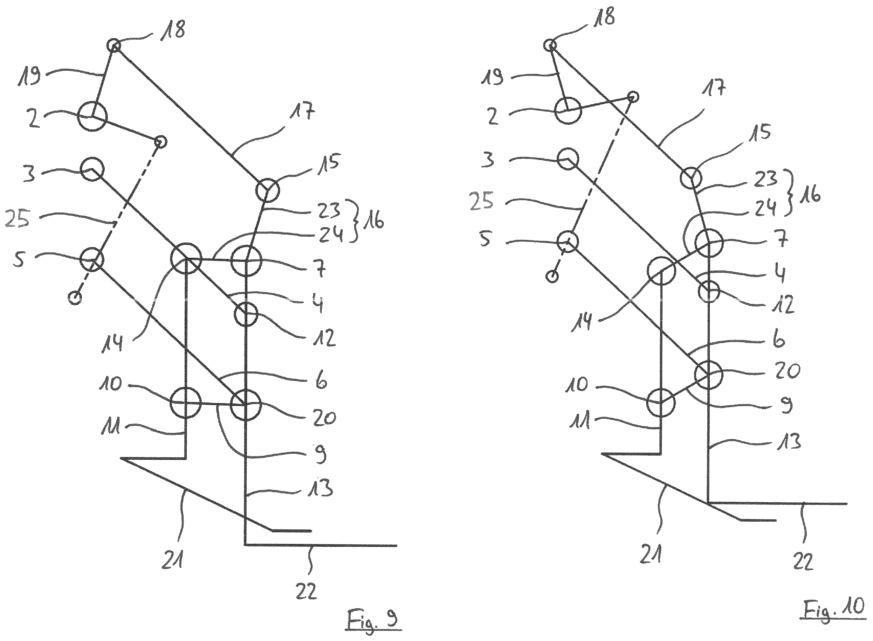

**In** den Fig. 9 und 10 wird das zweite Ausführungsbeispiel bei unterschiedlichen Stellungen der Stellvorrichtung 42, jedoch in der der gleichen Arbeitsposition gezeigt. Die gezeigten Stellungen weichen einzig dadurch voneinander ab, dass die Stellvorrichtung 42 das Tastelement 21 relativ zum Schneidelement 22 in eine abweichende Position gebracht hat. Das Schneidelement 22 verbleibt dabei relativ zum Schneidvorrichtungsrahmen 1 in der gleichen Position. Zwischen Fig. 9 und Fig. 10 wurde das Tastelement 21 durch eine Rotation des Stellelementes 19 entgegen den Uhrzeigersinn gemeinsam mit dem zweiten Halteelement 11 relativ zum Schneidelement 22 abgelassen. Dazu dient die zweite Parallelogrammführung, die eine solche Bewegung unabhängig von einer Verstellung des ersten Halteelementes 13 relativ zum Schneidvorrichtungsrahmen 1 ermöglicht.

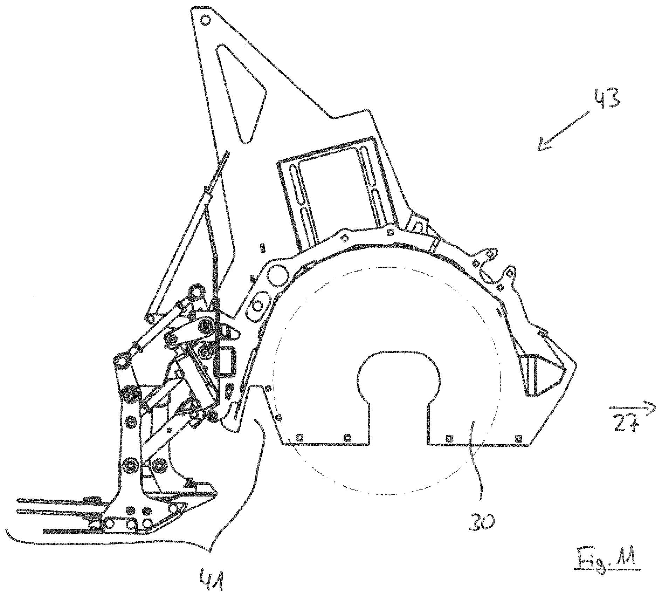

Fig. 11 zeigt eine erste erfindungsgemäße Vorrichtung 43 mit einer Schneidvorrichtung 40, von der eine Schneideinheit 41 sichtbar ist. Der Schneidvorrichtung 40 in die Fortbewegungsrichtung 27 vorgeordnet ist eine Krautentfernungsvorrichtung 30, die zeichnerisch nur angedeutet ist. Die Krautentfernungsvorrichtung 30 umfasst ein im Betrieb um eine Rotationsachse rotierendes Krautentfernungselement. Die Rotationsachse ist dabei ortsfest zum Schneidvorrichtungsrahmen 1.

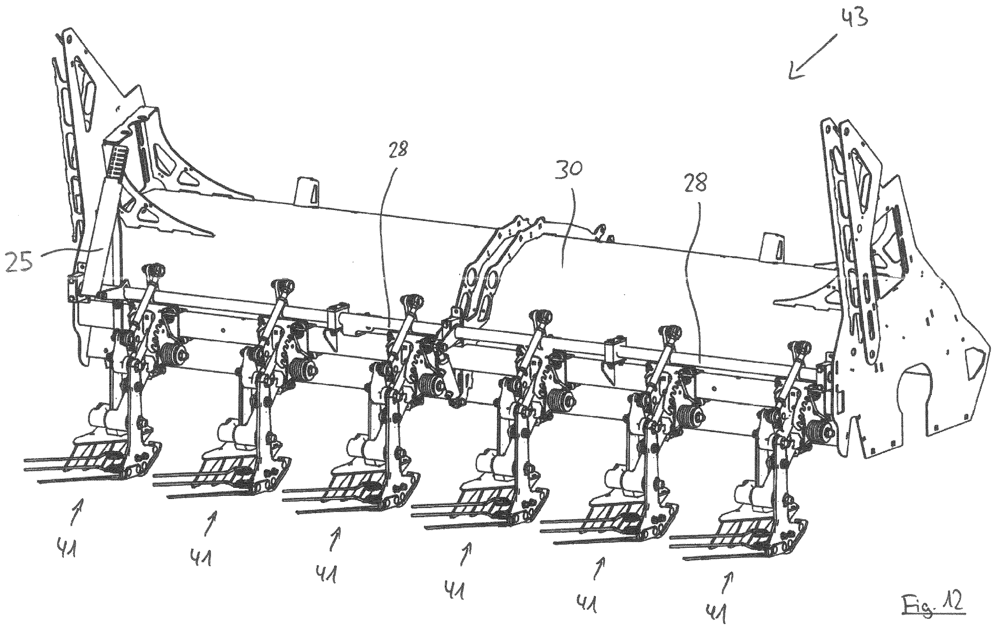

Figur 12 zeigt die erste Vorrichtung 43 mit sämtlichen ihrer sechs Schneideinheiten 41. Jeder der Schneideinheiten 41 ist ein Stellelement 19 zugeordnet, welche relativ zueinander und zum Querstellelement 28 ortsfest und lagefixiert sind. Am linken Ende des Querstellelementes 28 ist das Zentralstellelement 25 angeordnet. Hierdurch ist das Querstellelement 28 schwenkbar und in unterschiedlichen Positionen fixierbar.

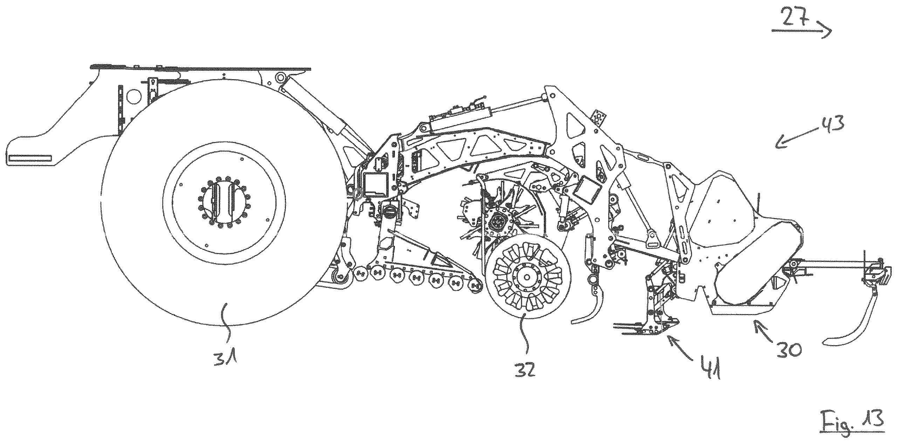

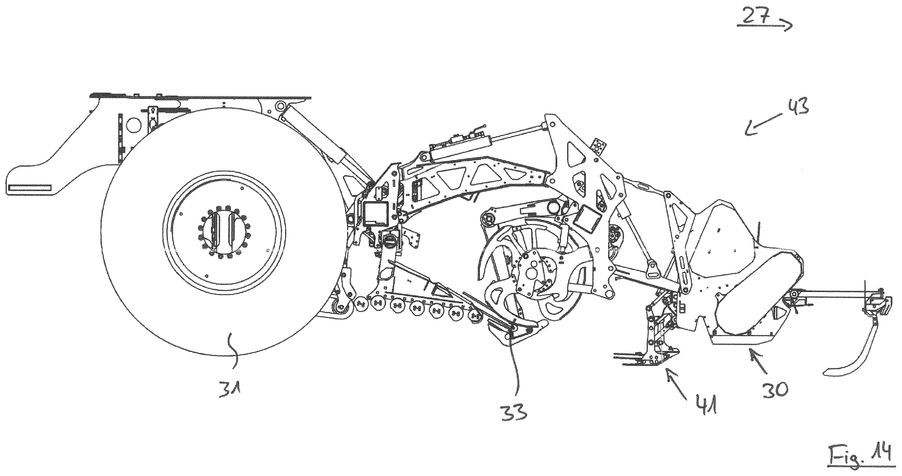

Die Fig. 13 und 14 zeigen eine zweite und eine dritte Vorrichtungen 43, jeweils in einem an eine Erntemaschine angebauten Zustand. Von der Erntemaschine ist jeweils nur ein Teil des Maschinenrahmens sowie ein Vorderrad 31 dargestellt, das im Betrieb der Vorrichtung 43 in die Fortbewegungsrichtung 27 der Schneidvorrichtung 40 nachläuft. Die Vorrichtung 43 gemäß Fig. 13 umfasst zur Aufnahme von Rüben einen Radrodeschar 32. Die Vorrichtung 43 gemäß Fig. 14 umfasst zur Aufnahme der Rüben alternativ einen Rüttelschar 33.

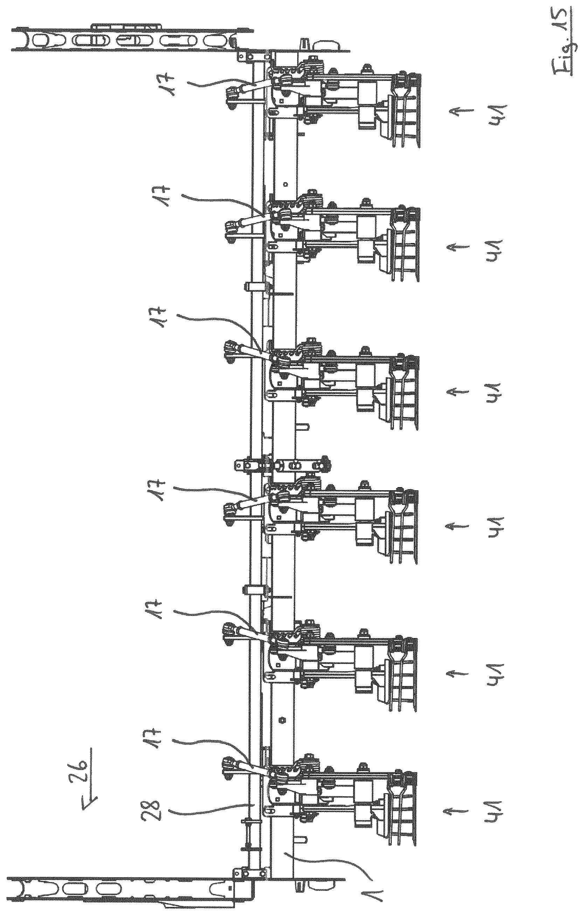

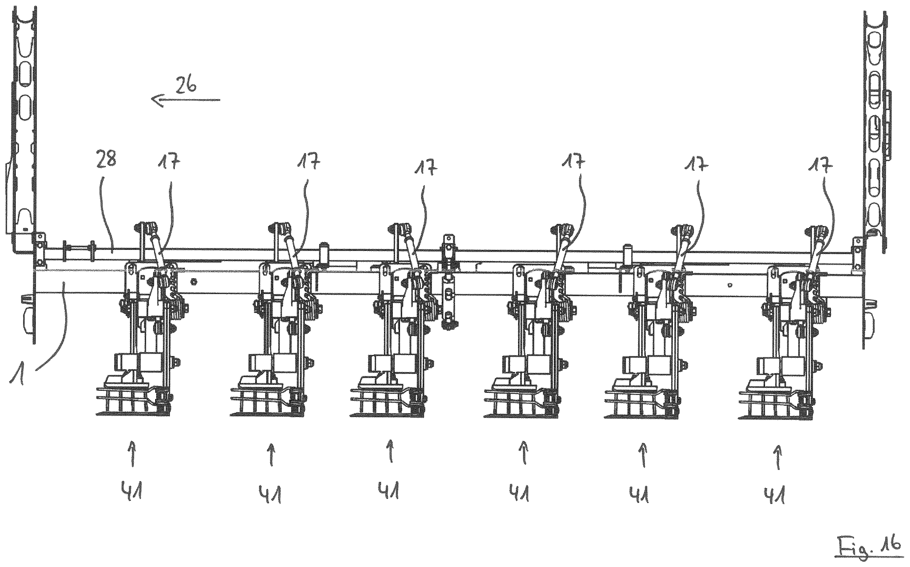

Die Fig. 15 und 16 zeigen unterschiedliche Arbeitskonfigurationen einer dritten erfindungsgemäßen Schneidvorrichtung 40. Diese umfasst wiederum sechs Schneideinheiten 41 sowie ein zentrales Querstellelement 28. Mit der Schneidvorrichtung 40 lassen sich Rüben unabhängig davon schneiden, ob die Rübenreihen 45 oder 50 cm voneinander beabstandet sind, ohne auf die vorbeschriebenen Vorteile verzichten zu müssen. Hierzu sind die Stellkoppelelemente 17 derart angeordnet, dass sie sich relativ zum zugeordneten Stellelement 19 um eine zweite Schwenkachse verschwenken lassen. Außerdem haben die Stellkoppelelemente 17 in diesem Ausführungsbeispiel eine größere Länge als die Rahmenkoppelelemente 4, 6.

Im gezeigten Ausführungsbeispiel sind die mittleren beiden Schneideinheiten 41 relativ zum Schneidvorrichtungsrahmen 1 in die Querrichtung 26 fixiert. Diese sind reihenweitenunabhängig derart angeordnet, dass ihre Längsmittelebenen 475 mm voneinander beabstandet sind. Bei beiden genannten Reihenweiten sind die Längsmittelebenen somit jeweils um 12,5 mm zur jeweiligen Reihenmitte versetzt angeordnet, womit keine wesentliche Beeinträchtigung des Schneidergebnisses einhergeht.

Die linken beiden Schneideinheiten 41 bilden ebenso wie die rechten beiden Schneideinheiten 41 ein Paar, innerhalb dessen die jeweiligen beiden Schneideinheiten 41 zueinander in die Querrichtung 26 unbeweglich sind. Die Paare als Gesamtheiten lassen sich in die Querrichtung 26 verschieben. Die Längsmittelebenen der Schneideinheiten 41 der Paare haben wiederum einen Abstand von 475 mm voneinander. **In** der Arbeitskonfiguration gemäß Figur 16, welche dem Ernten von Rüben mit Reihenweiten von 45 cm dient, sind die Paare zu den mittleren Schneideinheiten 41 hin verschoben. Beide Paare sind dabei so angeordnet, dass der maximale Abstand der Längsmittelebenen von der jeweiligen Reihenmitte möglichst gering bei gehalten wird. Insgesamt haben dadurch sämtliche Längsmittelebenen einen Abstand von 12,5 mm zur jeweiligen Reihenmitte. Die Längsmittelebene der von außen gezählt zweiten Schneideinheiten 41 haben in dieser Arbeitskonfiguration einen Abstand < 45 cm von der Längsmittelebene der jeweils zur Mitte hin benachbarten Schneideinheit 41. Gegenüber Figur 16 sind die Paare in Fig. 15 um 100 mm nach außen verschoben angeordnet. Dazu ist an den Paaren ein nichtdargestellter hydraulischer Zylinder angeordnet. **In** der Arbeitskonfiguration gemäß Fig. 15, die zum Ernten von Rüben mit Reihenweiten von 50 cm ausgebildet ist, haben somit wiederum sämtliche Längsmittelebenen einen Abstand von 12,5 mm zur jeweiligen Reihenmitte, wobei der Abstand der Längsmittelebenen der von außen gezählt zweiten Schneideinheiten 41 in dieser Arbeitskonfiguration einen Abstand > 50 cm von der Längsmittelebene der jeweils zur Mitte hin benachbarten Schneideinheit 41 haben.

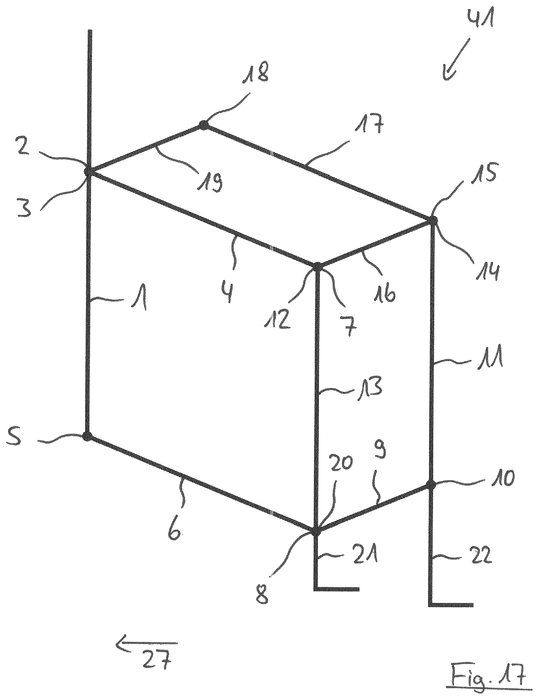

Fig. 17 zeigt schematisch eine vierte Ausführungsform der erfindungsgemäßen Schneidvorrichtung 40. Bei dieser Ausführungsform ist das zweite Halteelement 11 in Fahrtrichtung 27 hinter dem ersten Halteelement 13 angeordnet. Das erste Haltekoppelelement 16 ist übereinstimmend mit dem zweiten Haltekoppelelement 9 ausgebildet. Die vierte und die fünfte Halteschwenkachse 8, 20 sind koaxial ausgebildet. Auch die erste und die dritte Halteschwenkachse 7, 12 sind koaxial ausgebildet. Weiterhin sind die zweite Halteschwenkachse 14 und die erste Stellkoppelschwenkachse 15 koaxial ausgebildet. Dadurch hat diese Ausführungsform einen besonders geringen Bauraumbedarf.

### Bezugsziffernliste:

- 1: Schneidvorrichtungsrahmen
- 2: Stellrahmenschwenkachse
- 3: Erste Rahmenschwenkachse
- 4: Erstes Rahmenkoppelelement
- 5: Zweite Rahmenschwenkachse
- 6: Zweites Rahmenkoppelelement
- 7: Erste Halteschwenkachse
- 8: Fünfte Halteschwenkachse
- 9: Zweites Haltekoppelelement
- 10: Sechste Halteschwenkachse
- 11: Zweites Halteelement
- 12: Dritte Halteschwenkachse
- 13: Erstes Halteelement
- 14: Zweite Halteschwenkachse
- 15: Erste Stellkoppelschwenkachse
- 16: Erstes Haltekoppelelement
- 17: Stellkoppelelement
- 18: Zweite Stellkoppelschwenkachse
- 19: Stellelement
- 20: Vierte Halteschwenkachse
- 21: Tastelement
- 22: Schneidelement
- 23: Stellkoppelabschnitt
- 24: Haltekoppelabschnitt
- 25: Zentralstellelement
- 26: Querrichtung
- 27: Fortbewegungsrichtung
- 28: Querstellelement
- 29: Rückstellelement
- 30: Krautentfernungsvorrichtung
- 31: Vorderrad
- 32: Radrodeschar
- 33: Rüttelschar
- 40: Schneidvorrichtung
- 41: Schneideinheit
- 42: Stellvorrichtung
- 43: Vorrichtung

## Patentansprüche

1. Schneidvorrichtung (40) zum Schneiden von Pflanzen, die zumindest eine Schneideinheit (41) umfasst, die zumindest ein an einem Halteelement (11) befestigtes Tastelement (21) zur Bestimmung einer Erstreckung einer Pflanze, zumindest ein an einem weiteren Halteelement (13) befestigtes Schneidelement (22) zum Schneiden der Pflanze in Abhängigkeit von der Erstreckung und zumindest zwei Rahmenkoppelelemente (4,6) aufweist, wobei zumindest eines der Halteelemente (11,13) durch die Rahmenkoppelelemente (4,6) mit einem Schneidvorrichtungsrahmen (1) gekoppelt ist und die Halteelemente (11,13) relativ zueinander beweglich angeordnet sind,
**gekennzeichnet durch** eine Stellvorrichtung (42), die zu einer von einer Bewegung zumindest eines der Halteelemente (11,13) relativ zum Schneidvorrichtungsrahmen (1) unabhängigen Verstellung der Halteelemente (11,13) relativ zueinander ausgebildet ist.

2. Schneidvorrichtung nach Anspruch 1, **dadurch gekennzeichnet, dass** die Rahmenkoppelelemente (4,6) jeweils schwenkbar am Schneidvorrichtungsrahmen (1) und an einem ersten der Halteelemente (13) angeordnet sind und eine erste Parallelogrammführung ausbilden.

3. Schneidvorrichtung nach einem der vorhergehenden Ansprüche, **dadurch gekennzeichnet, dass** die Halteelemente (11,13) derart miteinander gekoppelt sind, dass sie relativ zueinander zumindest anteilig, insbesondere ausschließlich, translatorisch beweglich sind.

4. Schneidvorrichtung nach einem der vorhergehenden Ansprüche, **dadurch gekennzeichnet, dass** die Halteelemente (11,13) durch zumindest zwei an beiden Halteelementen (11,13) schwenkbar angeordnete Haltekoppelelemente (9,16) miteinander gekoppelt sind, die insbesondere eine zweite Parallelogrammführung ausbilden.

5. Schneidvorrichtung nach einem der vorhergehenden Ansprüche, **dadurch gekennzeichnet, dass** die Stellvorrichtung (42) zumindest ein insbesondere ausschließlich schwenkbar am Schneidvorrichtungsrahmen (1) angeordnetes Stellelement (19) zu Verstellung der Halteelemente (11,13) aufweist.

6. Schneidvorrichtung nach Anspruch 5, **dadurch gekennzeichnet, dass** die Stellvorrichtung (42) ein insbesondere am Stellelement (19) angeordnetes Stellkoppelelement (17) umfasst, das an einem ersten der Haltekoppelelemente (16) und/oder an einem zweiten der Halteelemente (11) angeordnet ist.

7. Schneidvorrichtung nach Anspruch 6, **dadurch gekennzeichnet, dass** das erste Haltekoppelelement (16) einen Stellkoppelabschnitt (23), der zumindest abschnittsweise zwischen einer ersten Halteschwenkachse (7), um die das erste Haltekoppelelement (16) schwenkbar am ersten Halteelement (13) angeordnet ist, und einer ersten Stellkoppelschwenkachse (15), um die das Stellkoppelement (17) relativ zum zweiten Halteelement (11) und/oder zum ersten Haltekoppelelement (16) schwenkbar ist, verläuft, und einen Haltekoppelabschnitt (24) aufweist, der zumindest abschnittsweise zwischen der ersten Halteschwenkachse (7) und einer zweiten Halteschwenkachse (14), um die das erstes Haltekoppelelement (16) schwenkbar am zweiten Halteelement (11) angeordnet ist, verläuft.

8. Schneidvorrichtung nach Anspruch 6 oder 7, **dadurch gekennzeichnet, dass** das Stellelement (19) und das erste Haltekoppelelement (16) zumindest in einer Position des ersten Halteelementes (13) relativ zum Schneidvorrichtungsrahmen (1) eine dritte Parallelogrammführung ausbilden.

9. Schneidvorrichtung nach einem der Ansprüche 6 bis 8, **dadurch gekennzeichnet, dass** eine zweite Stellkoppelschwenkachse (18), um die das Stellkoppelelement (17) relativ zum Stellelement (19) schwenkbar ist, von der ersten Stellkoppelschwenkachse (15) einen Abstand hat, der dem Abstand einer ersten Rahmenschwenkachse (3), um die ein erstes Rahmenkoppelelement (4) relativ zum Schneidvorrichtungsrahmen (1) schwenkbar ist, von einer dritten Halteschwenkachse (12) entspricht, um die das erste Rahmenkoppelelement (4) schwenkbar am ersten Halteelement (13) angeordnet ist.

10. Schneidvorrichtung nach einem der vorhergehenden Ansprüche unter Einschluss der Ansprüche 4 und 5, **dadurch gekennzeichnet, dass** eine Stellrahmenschwenkachse (2), um die das Stellelement (19) schwenkbar am Schneidvorrichtungsrahmen (1) angeordnet ist, und zumindest die erste Rahmenschwenkachse (3) einen Abstand voneinander haben, der dem Abstand der dritten Halteschwenkachse (12) von der ersten Halteschwenkachse (7) oder dem Abstand der zweiten Halteschwenkachse (14) zu der ersten Stellkoppelschwenkachse (15) entspricht.

11. Schneidvorrichtung nach einem der vorhergehenden Ansprüche, **dadurch gekennzeichnet, dass** das zweite Halteelement (11) bezogen auf eine Fortbewegungsrichtung (27) zumindest abschnittsweise zwischen dem Schneidvorrichtungsrahmen (1) und dem ersten Halteelement (13) angeordnet ist.

12. Schneidvorrichtung nach einem der vorhergehenden Ansprüche, **gekennzeichnet durch** zumindest zwei Schneideinheiten (41), wobei die Stellvorrichtung (42) zur Verstellung von Halteelementen (11,13) unterschiedlicher Schneideinheiten (41) ausgebildet ist und insbesondere jeder Schneideinheit (41) genau ein Stellelement (19) zugeordnet ist.

13. Schneidvorrichtung nach Anspruch 12, **dadurch gekennzeichnet, dass** zumindest eine der Schneideinheiten (41) relativ zum Schneidvorrichtungsrahmen (1) von einer ersten Arbeitskonfiguration in eine Querrichtung (26) in eine zweite Arbeitskonfiguration überführbar ist und das Stellelement (19) zur Verstellung der Halteelemente (11,13) der Schneideinheit (41) in der ersten und in der zweiten Arbeitskonfiguration ausgebildet ist.

14. Schneidvorrichtung nach Anspruch 13, **dadurch gekennzeichnet, dass** das Stellkoppelelement (17) relativ zum Stellelement (19) um eine von der zweiten Stellkoppelschwenkachse (18) abweichende Arbeitskonfigurationsschwenkachse schwenkbar angeordnet ist und das Stellelement (19) derart ausgebildet ist, das es bei einer Überführung der Schneideinheit (41) von der ersten in die zweite Arbeitskonfiguration insbesondere zumindest in die Querrichtung (26) ortsfest relativ zum Schneidvorrichtungsrahmen (1) verbleibt.

15. Vorrichtung (43) mit einer Schneidvorrichtung (40) nach einem der vorhergehenden Ansprüche und einer in eine Fortbewegungsrichtung (27) vorgeordneter Krautentfernungsvorrichtung (30) mit zumindest einem im Betrieb um eine Rotationsachse rotierenden Krautentfernungselement, wobei der Schneidvorrichtungsrahmen (1) zumindest im Betrieb ortsfest relativ zur Rotationsachse angeordnet ist.

## Claims

1. A cutting device (40) for cutting plants, which comprises at least one cutting unit (41) which has at least one probe element (21), which is fastened to a holding element (11) and is intended for determining an extent of a plant, at least one cutting element (22), which is fastened to a further holding element (13) and is intended for cutting the plant depending on the extent, and at least two frame coupling elements (4, 6), wherein at least one of the holding elements (11, 13) is coupled to a cutting device frame (1) by means of the frame coupling elements (4, 6), and the holding elements (11, 13) are arranged movably relative to one another,
**characterized by** an adjustment device (42) which is designed to adjust the holding elements (11, 13) relative to one another independently of a movement of at least one of the holding elements (11, 13) relative to the cutting device frame (1).

2. The cutting device as claimed in claim 1, **characterized in that** the frame coupling elements (4, 6) are each arranged pivotably on the cutting device frame (1) and on a first of the holding elements (13) and form a first parallelogram guide.

3. The cutting device as claimed in either of the preceding claims, **characterized in that** the holding elements (11,13) are coupled to one another in such a manner that they are movable at least partially, in particular exclusively, translationally relative to one another.

4. The cutting device as claimed in one of the preceding claims, **characterized in that** the holding elements (11, 13) are coupled to one another by means of at least two holding coupling elements (9, 16) which are arranged pivotable on the two holding elements (11, 13) and in particular form a second parallelogram guide.

5. The cutting device as claimed in one of the preceding claims, **characterized in that** the adjustment device (42) has at least one adjustment element (19), which is arranged in particular exclusively pivotably on the cutting device frame (1), for adjusting the holding elements (11, 13).

6. The cutting device as claimed in claim 5, **characterized in that** the adjustment device (42) comprises an adjustment coupling element (17) which is arranged in particular on the adjustment element (19) and is arranged on a first of the holding coupling elements (16) and/or on a second of the holding elements (11).

7. The cutting device as claimed in claim 6, **characterized in that** the first holding coupling element (16) has an adjustment coupling portion (23), which runs at least in sections between a first holding pivot axis (7), about which the first holding coupling element (16) is arranged pivotably on the first holding element (13), and a first adjustment coupling pivot axis (15), about which the adjustment coupling element (17) is pivotable relative to the second holding element (11) and/or to the first holding coupling element (16), and a holding coupling portion (24), which runs at least in sections between the first holding pivot axis (7) and a second holding pivot axis (14), about which the first holding coupling element (16) is arranged pivotably on the second holding element (11).

8. The cutting device as claimed in claim 6 or 7, **characterized in that** the adjustment element (19) and the first holding coupling element (16) form a third parallelogram guide at least in a position of the first holding element (13) relative to the cutting device frame (1).

9. The cutting device as claimed in one of claims 6 to 8, **characterized in that** a second adjustment coupling pivot axis (18), about which the adjustment coupling element (17) is pivotable relative to the adjustment element (19), is at a distance from the first adjustment coupling pivot axis (15), which distance corresponds to the distance of a first frame pivot axis (3), about which a first frame coupling element (4) is pivotable relative to the cutting device frame (1), from a third holding pivot axis (12), about which the first frame coupling element (4) is arranged pivotably on the first holding element (13).

10. The cutting device as claimed in one of the preceding claims including claims 4 and 5, **characterized in that** an adjustment frame pivot axis (2), about which the adjustment element (19) is arranged pivotably on the cutting device frame (1), and at least the first frame pivot axis (3) are at a distance from one another, which distance corresponds to the distance of the third holding pivot axis (12) from the first holding pivot axis (7) or to the distance of the second holding pivot axis (14) from the first adjustment coupling pivot axis (15).

11. The cutting device as claimed in one of the preceding claims, **characterized in that** the second holding element (11) is arranged at least in sections between the cutting device frame (1) and the first holding element (13) with respect to a direction of travel (27).

12. The cutting device as claimed in one of the preceding claims, **characterized by** at least two cutting units (41), wherein the adjustment device (42) is designed to adjust holding elements (11, 13) of different cutting units (41) and in particular each cutting unit (41) is assigned precisely one adjustment element (19).

13. The cutting device as claimed in claim 12, **characterized in that** at least one of the cutting units (41) can be transferred in a transverse direction (26) relative to the cutting device frame (1) from a first working configuration into a second working configuration, and the adjustment element (19) is designed to adjust the holding elements (11, 13) of the cutting unit (41) in the first and in the second working configuration.

14. The cutting device as claimed in claim 13, **characterized in that** the adjustment coupling element (17) is arranged pivotably relative to the adjustment element (19) about a working configuration pivot axis differing from the second adjustment coupling pivot axis (18), and the adjustment element (19) is designed in such a manner that it remains positionally fixed relative to the cutting device frame (1) during a transfer of the cutting unit (41), in particular at least in the transverse direction (26), from the first into the second working configuration.

15. A device (43) having a cutting device (40) as claimed in one of the preceding claims and a haulm removal device (30) which is arranged upstream in a direction of travel (27) and has at least one haulm removal element rotating about an axis of rotation during operation, wherein the cutting device frame (1) is arranged in a fixed position relative to the axis of rotation at least during operation.

## Revendications

1. Dispositif de coupe (40) pour la coupe de plantes, comprenant au moins une unité de coupe (41), laquelle comprend au moins un élément palpeur (21) fixé à un élément de support (11) pour déterminer une étendue d'une plante, au moins un élément de coupe (22) fixé à un autre élément de support (13) pour couper la plante en fonction de l'étendue, et au moins deux éléments de couplage de cadre (4, 6), au moins l'un des éléments de support (11, 13) étant couplé à un cadre de dispositif de coupe (1) par l'intermédiaire des éléments de couplage de cadre (4, 6), et les éléments de support (11, 13) étant disposés de manière mobile l'un par rapport à l'autre, **caractérisé par** un dispositif de réglage (42) conçu pour assurer un réglage des éléments de support (11, 13) l'un par rapport à l'autre indépendamment d'un mouvement d'au moins l'un des éléments de support (11, 13) par rapport au cadre de dispositif de coupe (1).

2. Dispositif de coupe selon la revendication 1, **caractérisé en ce que** les éléments de couplage de cadre (4, 6) sont chacun disposés de manière pivotante sur le cadre de dispositif de coupe (1) et sur un premier des éléments de support (13), et forment un premier guidage en parallélogramme.

3. Dispositif de coupe selon l'une des revendications précédentes, **caractérisé en ce que** les éléments de support (11, 13) sont couplés entre eux de telle sorte qu'ils sont mobiles l'un par rapport à l'autre au moins partiellement, en particulier exclusivement, en translation.

4. Dispositif de coupe selon l'une des revendications précédentes, **caractérisé en ce que** les éléments de support (11, 13) sont couplés entre eux par au moins deux éléments de couplage de support (9, 16) disposés de manière pivotante sur les deux éléments de support (11, 13), lesquels forment en particulier un deuxième guidage en parallélogramme.

5. Dispositif de coupe selon l'une des revendications précédentes, **caractérisé en ce que** le dispositif de réglage (42) comprend au moins un élément de réglage (19), en particulier disposé exclusivement de manière pivotante sur le cadre de dispositif de coupe (1), pour le réglage des éléments de support (11, 13).

6. Dispositif de coupe selon la revendication 5, **caractérisé en ce que** le dispositif de réglage (42) comprend un élément de couplage de réglage (17), en particulier disposé sur l'élément de réglage (19), lequel est disposé sur un premier des éléments de couplage de support (16) et/ou sur un deuxième des éléments de support (11).

7. Dispositif de coupe selon la revendication **6, caractérisé en ce que** le premier élément de couplage de support (16) comprend une section de couplage de réglage (23), qui s'étend au moins par sections entre un premier axe de pivotement de support (7), autour duquel le premier élément de couplage de support (16) est disposé de manière pivotante sur le premier élément de support (13), et un premier axe de pivotement de couplage de réglage (15), autour duquel **l'élément** de couplage de réglage (17) est pivotant par rapport au deuxième élément de support (11) et/ou au premier élément de couplage de support (16), et une section de couplage de support (24), qui s'étend au moins par sections entre le premier axe de pivotement de support (7) et un deuxième axe de pivotement de support (14), autour duquel le premier élément de couplage de support (16) est disposé de manière pivotante sur le deuxième élément de support (11).

8. Dispositif de coupe selon la revendication 6 ou 7, **caractérisé en ce que** l'élément de réglage (19) et le premier élément de couplage de support (16) forment, au moins dans une position du premier élément de support (13) par rapport au cadre de dispositif de coupe (1), un troisième guidage en parallélogramme.

9. Dispositif de coupe selon l'une des revendications 6 à 8, **caractérisé en ce qu'**un deuxième axe de pivotement de couplage de réglage (18), autour duquel l'élément de couplage de réglage (17) est disposé de manière pivotante par rapport à l'élément de réglage (19), est distant du premier axe de pivotement de couplage de réglage (15) d'une distance correspondant à la distance entre un premier axe de pivotement de cadre (3), autour duquel un premier élément de couplage de cadre (4) est disposé de manière pivotante par rapport au cadre de dispositif de coupe (1), et un troisième axe de pivotement de support (12), autour duquel le premier élément de couplage de cadre (4) est disposé de manière pivotante sur le premier élément de support (13).

10. Dispositif de coupe selon l'une des revendications précédentes, y compris les revendications 4 et 5, **caractérisé en ce qu'**un axe de pivotement de cadre de réglage (2), autour duquel l'élément de réglage (19) est disposé de manière pivotante sur le cadre de dispositif de coupe (1), et au moins le premier axe de pivotement de cadre (3) sont espacés l'un de l'autre d'une distance correspondant à la distance entre le troisième axe de pivotement de support (12) et le premier axe de pivotement de support (7) ou à la distance entre le deuxième axe de pivotement de support (14) et le premier axe de pivotement de couplage de réglage (15).

11. Dispositif de coupe selon l'une des revendications précédentes, **caractérisé en ce que** le deuxième élément de support (11), par rapport à une direction de déplacement (27), est disposé au moins par sections entre le cadre de dispositif de coupe (1) et le premier élément de support (13).

12. Dispositif de coupe selon l'une des revendications précédentes, **caractérisé par** au moins deux unités de coupe (41), le dispositif de réglage (42) étant conçu pour le réglage des éléments de support (11, 13) de différentes unités de coupe (41), et en particulier un seul élément de réglage (19) étant attribué à chaque unité de coupe (41).

13. Dispositif de coupe selon la revendication 12, **caractérisé en ce qu'**au moins une des unités de coupe (41) est transformable, par rapport au cadre de dispositif de coupe (1), d'une première configuration de travail vers une deuxième configuration de travail selon une direction transversale (26), et **en ce que** l'élément de réglage (19) est conçu pour le réglage des éléments de support (11, 13) de l'unité de coupe (41) dans la première et dans la deuxième configuration de travail.

14. Dispositif de coupe selon la revendication 13, **caractérisé en ce que** l'élément de couplage de réglage (17) est disposé de manière pivotante par rapport à l'élément de réglage (19) autour d'un axe de pivotement de configuration de travail différent du deuxième axe de pivotement de couplage de réglage (18), et **en ce que** l'élément de réglage (19) est conçu de telle sorte qu'il reste, lors d'une transformation de l'unité de coupe (41) de la première à la deuxième configuration de travail, en particulier au moins dans la direction transversale (26), fixe par rapport au cadre de dispositif de coupe (1) .

15. Dispositif (43) comprenant un dispositif de coupe (40) selon l'une des revendications précédentes et un dispositif d'élimination des fanes (30) disposé en amont dans une direction de déplacement (27), comprenant au moins un élément d'élimination des fanes tournant autour d'un axe de rotation en fonctionnement, le cadre de dispositif de coupe (1) étant disposé au moins en fonctionnement de manière fixe par rapport à l'axe de rotation.
